# EUROPÄISCHE PATENTSCHRIFT

(11) **EP 3 140 616 B1**
(45) Veröffentlichungstag und Bekanntmachung des Hinweises auf die Patenterteilung: **13.06.2018**
(21) Anmeldenummer: 15715986.4
(22) Anmeldetag: 14.04.2015
(51) Int. Cl.: G01C 21/36

(54) **VERFAHREN ZUM BETRIEB EINES NAVIGATIONSSYSTEMS EINES KRAFTFAHRZEUGS UND KRAFTFAHRZEUG**
METHOD FOR OPERATING A NAVIGATION SYSTEM OF A MOTOR VEHICLE, AND MOTOR VEHICLE
PROCÉDÉ D'UTILISATION D'UN SYSTÈME DE NAVIGATION D'UN VÉHICULE AUTOMOBILE ET VÉHICULE AUTOMOBILE

(30) Priorität: 06.05.2014 DE 102015006065
(43) Veröffentlichungstag der Anmeldung: 15.03.2017
(73) Patentinhaber: Audi AG, 85045 Ingolstadt (DE)
(72) Erfinder: HUTH, Andre, 85053 Ingolstadt (DE)
(74) Vertreter: Bauer, Dominik Michael
(86) Internationale Anmeldenummer: PCT/EP2015/000784
(87) Internationale Veröffentlichungsnummer: WO 2015/169420

(56) Entgegenhaltungen:
- EP-A1- 1 568 970
- DE-A1-102005 016 214
- US-A1- 2013 325 329

## Beschreibung

Die Erfindung betrifft ein Verfahren zum Betrieb eines Navigationssystems eines Kraftfahrzeugs und ein Kraftfahrzeug.

Navigationssysteme für Kraftfahrzeuge sind im Stand der Technik bereits hinreichend bekannt. Mit Hilfe eines geeigneten Positiönssensors, insbesondere eines GPS-Sensors, kann eine aktuelle geodätische Position des Kraftfahrzeugs bestimmt werden. Eine Benutzerschnittstelle, meist ein allgemein eingesetztes Mensch-Maschine-Interface des Kraftfahrzeugs, erlaubt die Auswahl eines Navigationsziels, woraufhin im Steuergerät des Navigationssystems eine optimale Route nach bestimmten, teilweise durch den Benutzer veränderbaren Kriterien erfolgt. Über entsprechend ausgegebene Hinweise wird der Fahrer zu seinem Navigationsziel geleitet. Für zukünftige, teilautonom oder vollautonom fahrende Kraftfahrzeuge ist auch eine vollständig autopilotierte Führung mit Hilfe eines Navigationssystems denkbar und angedacht.

Um die Zielführung zu ermöglichen, werden durch moderne Navigationssysteme digitale Kartendaten verwendet, die verfügbare, durch das Kraftfahrzeug befahrbare und mithin erreichbare Bereiche des Straßennetzes beschreiben. Entsprechend werden Navigationsziele standardmäßig durch Adressangaben innerhalb der Kartendaten definiert, das bedeutet, das Navigationsziel ist üblicherweise ein in den Kartendaten enthaltener, durch das Kraftfahrzeug befahrbarer Ort. Eine Führung zu geodätischen Positionen außerhalb des durch die Kartendaten beschriebenen Straßennetzes ist mithin üblicherweise nicht vorgesehen.

Es wurden inzwischen auch moderne Navigationssysteme vorgeschlagen, bei denen ein Navigationsziel nicht zwangsläufig über eine dedizierte Benutzeroberfläche des Navigationssystems benutzerseitig eingegeben werden muss, sondern auch aus anderen, zum Navigationssystem externen Quellen entgegengenommen werden kann. Ein solcher Zieldatensatz kann beispielsweise von einer Internetquelle her stammen, beispielsweise von einem Online-Kartensystem, einem Online-Reiseführer und dergleichen. Der Benutzer wählt mithin navigationsextern ein Navigationsziel, beispielsweise einen sogenannten Point of Interest (POI), aus, welches üblicherweise durch eine geodätische Position bestimmt ist, also eine Position in einem geodätischen Koordinatensystem, das auch den digitalen Kartendaten zum Abgleich mit einer aktuellen geodätischen Position des Kraftfahrzeugs zugrunde liegt.

Der Zieldatensatz muss in ein durch das Navigationssystem bewertbares Navigationsziel umgewandelt werden, wobei hierfür bei bekannten Vorgehensweisen die geodätische Position in dem Zieldatensatz verwendet wird, nachdem eine ebenso in dem Zieldatensatz enthaltene Adresse auch eine gegebenenfalls anderweitig gelegene Postanschrift oder dergleichen sein kann, mithin nicht dem durch die geodätische Position beschriebenen Ziel entsprechen muss. Daher wurde vorgeschlagen, die geodätische Position (oft auch als Geo-Koordinaten bezeichnet) zu nutzen, um das Navigationsziel zu definieren. Die geodätische Position muss nicht zwangsläufig einen mit dem Kraftfahrzeug erreichbaren Ort oder einen sinnvollen Zugang zu dem Zielort beschreiben, da sie üblicherweise recht grob vergeben wird, beispielsweise als Zentrum eines bebauten Geländes oder dergleichen. Bekannte Ansätze schlagen nun vor, den der Position im Zieldatensatz nächstgelegenen durch das Kraftfahrzeug erreichbaren Ort, also eine Adresse, im durch die Kartendaten beschriebenen Straßennetz aufzufinden. Dafür können beispielsweise die Abstände der geodätischen Position zu verschiedenen in einem Zielbereich um die Position vorhandenen Straßen betrachtet werden, mithin letztlich das Lot zu der Straße hin gefällt werden. Der kürzeste Abstand wird ausgewählt und die entsprechende Position entlang der zugehörigen Straße bildet die Adresse, die als Navigationsziel verwendet wird.

Es hat sich jedoch gezeigt, dass insbesondere dann, wenn der durch den Zieldatensatz beschriebene Ort ein größeres Gelände ist, mit der beschriebenen Variante nicht immer zu einem Zugang zu dem Gelände geführt wird, da sich dieser an einer gänzlich anderen Position befinden kann, beispielsweise auf der komplett anderen Seite eines von Straßen umgebenen Bebauungsblocks. Mithin wird der Benutzer zwar in die grobe Umgebung des durch den Zieldatensatz beschriebenen Zielortes geführt, muss sich dann jedoch, gegebenenfalls durch bestimmte Verkehrsregelungen erschwert, den restlichen Weg selbst erarbeiten. Dies ist unerwünscht und entspricht nicht der Erwartungshaltung des Benutzers.

Insbesondere treten auch Probleme auf, wenn an der Stelle des kürzesten Abstands zu einer Straße auf dieser Straße in der näheren Umgebung keine Hausnummer vorliegt, so dass das Navigationsziel als Adresse dann lediglich nur die Straße ohne die Hausnummer beinhaltet und deutliche Abweichungen vom eigentlichen Zielort auftreten können.

EP 1 568 970 A1 betrifft ein Verfahren zum Eingeben von Zieldaten mittels eines Mobilterminals. Hierbei soll die Dateneingabe in ein Navigationssystem verbessert werden, indem die ohnehin vorliegenden Datenbanken auf Mobilterminals ausgenutzt werden sollen, welche Informationen über Personen und Organisationen enthalten, die von Interesse für den entsprechenden Benutzer sind. Als Eingabe dienen dabei Adressdaten, wobei aus diesen Adressdaten Zieldaten abgeleitet werden sollen, zu denen das Navigationssystem führen kann. Die Plausibilität der übermittelten Adresse kann durch eine Adressdatenbank überprüft und ggf. korrigiert werden.

US 2013/325329 A1 betrifft die Aktualisierung geographischer Daten in einer Datenbank basierend auf Benutzereingaben, wobei ein Name und eine Position eines interessierenden Punktes (POI) empfangen werden, mithin ein Informationstupel. Dieses Informationstupel aus Position und Name wird mit Informationstupeln in der Datenbank dahingehend verglichen, ob sowohl der Name als auch die Position übereinstimmen. Ist dies der Fall, wird ein Verlässlichkeitswert (Konfidenzwert) erhöht, ist dies nicht der Fall, wird die POI als neue POI zumindest temporär gespeichert.

DE 10 2005 016 214 A1 offenbart ein Navigationssystem, und ein Navigationsverfahren mit der Fähigkeit zum Import und Export von Sonderzielen und Navigationskarten. In Navigationsinformationen eines digitalisierten Gebiets sind Adressen mit zugeordneten Geokoordinaten gespeichert. Beispielsweise aus einer digitalen Signatur in Outlook können Ziele über eine bidirektionale Schnittstelle importiert werden. Kann das Ziel nicht direkt angefahren werden, wird ein Kartenausschnitt um das Ziel angezeigt.

Der Erfindung liegt daher die Aufgabe zugrunde, eine verbesserte, intelligentere Möglichkeit zur Definition eines Navigationsziels unter Ausnutzung aller vorhandenen Informationen anzugeben.

Zur Lösung dieser Aufgabe ist erfindungsgemäß ein Verfahren zum Betrieb eines Navigätionssystems eines Kraftfahrzeugs mit den Merkmalen des Anspruchs 1 vorgesehen.

Die Erfindung nutzt mithin die Tatsache aus, dass bestimmten Zielorten zugeordnete Zieldatensätze neben der geodätischen Position des Zielorts auch eine Adressinformatiön enthalten, die jedoch, wie eingangs bereits angedeutet wurde, nicht zwangsläufig der geodätischen Position entspricht. Mithin werden die Kartendaten genutzt, um zu überprüfen, ob sich die in dem Zieldatensatz enthaltene erste Adresse, insbesondere die entsprechende Straße, welche durch einen Straßennamen beschrieben wird, überhaupt in der Nähe der Position, also einem Zielbereich, befindet. Dabei wird ein Abweichungsmaß ausgewertet, da es häufig vorkommt, dass beispielsweise Straßennamen oder sonstige Ortsangaben etwas anders geschrieben in unterschiedlichen Datenbanken enthalten sind. Mithin kann eine gewisse, geringe Abweichung zwischen einem Straßennamen in dem Zieldatensatz und einem Straßennamen in den digitalen Kartendaten des Navigationssystems vorkommen, obwohl dieselbe Straße gemeint ist. Daher wird ein Maximalwert für das Abweichungsmaß verwendet, der unterschritten werden muss, damit von einer Gleichheit der durch die Straßennamen angezeigten Straßen bzw. allgemein Adressen ausgegangen werden kann. Auf diese Weise wird letztlich plausibilisiert, ob die erste Adresse des Zieldatensatzes auch tatsächlich in der Nähe der geodätischen Position gelegen sein kann. Ist dies der Fall, wird diese Entsprechung ausgenutzt, um sich bezüglich des Navigationsziels an der ersten Adresse zu orientieren.

Zweckmäßig ist es dabei, dass dann, falls das Abweichungsmaß der zweiten Adresse von der ersten Adresse den Maximalwert überschreitet, eine distanzmäßig am nächsten zur Position gelegene dritte mit dem Kraftfahrzeug erreichbare Adresse ausgewählt wird und das Navigationssystem zur Navigation zu der dritten Adresse betrieben wird. Dabei kann die dritte Adresse ebenso aus den Testadressen ausgewählt werden, es ist aber auch denkbar, sie neu zu bestimmen. Dies entspricht dem bezüglich des Standes der Technik bereits beschriebenen Verfahren, in dem der räumlich nächstgelegene, als ein Navigationsziel in den digitalen Kartendaten definierbare Ort zu der geodätischen Position des Zieldatensatzes gesucht und angesteuert wird. Dabei handelt es sich mithin um eine "fall back"-Lösung, falls der Zieldatensatz mithin keine nützlichen Informationen zur Auswahl eines sinnvolleren Navigationsziels bietet. Es sei darauf hingewiesen, dass es grundsätzlich auch denkbar ist, andere Methoden zur Auswahl der dritten, bei Überschreitung des Abweichungsmaßes zu verwendenden Adresse einzusetzen, die sich ebenfalls an der geodätischen Position orientieren.

Auf diese Weise werden also zusätzliche, in dem Zieldatensatz enthaltene Adressinformationen, also die erste Adresse, zur Definition eines sinnvolleren Navigationsziels genutzt, wenn dies aufgrund der vorliegenden digitalen Kartendaten und der geodätischen Position plausibel erscheint. So werden Fälle vermieden, in denen der Benutzer des Navigationssystems an ein ungünstiges Navigationsziel geleitet wird, obwohl Informationen zu einem spinnvolleren Navigationsziel in dem Zieldatensatz bereits enthalten waren. Hierzu werden die physikalisch-technischen Sachverhalte, nämlich Ortsinformationen in einem geodätischen Koordinatensystem, genutzt, um die Plausibilität zusätzlicher physikalischer Ortsinformationen in dem Zieldatensatz und deren Berücksichtigung bei der Wahl des Navigationsziels zu verifizieren.

Dabei sei nochmals darauf hingewiesen, dass es zur Bildung einer Adresse im erfindungsgemäßen Sinne bereits ausreichen kann, einen Straßennamen oder eine entsprechende Ortsbezeichnung in einem bestimmten Ort anzugeben, das bedeutet, das Vorliegen von Hausnummern ist nicht zwangsläufig notwendig. Hierauf soll im Folgenden auch noch näher eingegangen werden. Je nach der Struktur der Kartendaten können bestimmte Straßen Kanten innerhalb des durch die digitalen Kartendaten beschriebenen Straßennetzes darstellen, Kreuzungen mehrerer Straßen bilden dann Knoten. Diesbezüglich würde beispielsweise vorgesehen werden, der geodätischen Position im Zielbereich benachbarte Kanten aufzufinden und ihrer Bezeichnung, insbesondere dem Straßennamen, nach zu bewerten, inwieweit sie mit der ersten Adresse des Zieldatensatzes übereinstimmen könnten.

Konkret kann vorgesehen sein, dass der Zielbereich eine vorbestimmte Ausdehnung um die Position aufweist, insbesondere eine Ausdehnung im Bereich von 100 bis 500 m, oder die Ausdehnung des Zielbereichs von der Anzahl innerhalb verschiedener Testbereiche aufgefundener Testadressen abhängig gewählt wird. In der Praxis hat sich eine vorbestimmte Ausdehnung von etwa 200 m als nützlich erwiesen, um einen quadratischen oder kreisförmigen Suchbereich zu definieren, in dem Straßen und verwandte Örtlichkeiten aufgefunden werden können. Werden jedoch eine Vielzahl von Zielorten entsprechenden Zieldatensätzen erwartet, die deutlich weiter von befahrbaren, im Straßennetz der digitalen Kartendaten abgedeckten Bereichen entfernt sind, kann es auch zweckmäßig sein, den Suchbereich als Testbereich beispielsweise sukzessiv zu erweitern, bis Adressen aufgefunden werden können, die als Grundlage eines Navigationsziels dienen können. Es wird darauf hingewiesen, dass derartige räumliche Einschränkungen selbstverständlich auch bei der Ermittlung einer dritten Adresse aufgehoben werden können; entsprechend könnte, wenn innerhalb eines Zielbereichs vorbestimmte Ausdehnung keine Testadresse aufgefunden wird, eine dritte Adresse unter Verwendung eines größeren Zielbereichs oder gar ohne Beschränkung gesucht werden. Selbstverständlich ist auch eine maximale Abstandsbeschränkung denkbar, oberhalb derer ein Hinweis an den Nutzer ausgegeben wird, beispielsweise "dorthin führt keine Straße".

Wie bereits erwähnt, können sich die Testadressen dadurch auszeichnen, dass sie sich lediglich auf Straßennamen beziehen, die mit entsprechenden Straßennamen der ersten Adresse verglichen werden. Werden genauere Testadressen bestimmt, ist es dennoch zweckmäßig, die Zahl der Testadressen gering zu halten, beispielsweise auf eine pro Straße zu reduzieren. So kann vorgesehen sein, dass insbesondere bei zusätzlich zu dem Straßennamen weitere Daten enthaltenden Testadressen die Anzahl der Testadressen vor dem Vergleich mit der ersten Adresse anhand eines Redundanzkriteriums reduziert wird, wobei für jeden Straßennamen nur eine am nächsten zu der Position gelegene Testadresse beibehalten wird. Dies ist insbesondere dann zweckmäßig, wenn beispielsweise Hausnummern oder dergleichen zusätzlich betrachtet werden, da dann in Fällen, in denen eine Hausnummer nicht aus anderen Daten bestimmt werden kann, für die zweite Adresse dann auch unmittelbar eine Hausnummer vorliegt, die angesteuert werden kann. Bevorzugter ist es jedoch, für die Testadressen zunächst nur Straßen zu betrachten, wobei eine Hausnummer oder dergleichen auch zu einem späteren Zeitpunkt noch bestimmt werden kann, was im Folgenden noch näher dargelegt werden soll.

Als Abweichungsmaß kann zweckmäßigerweise ein Levenshtein-Maß verwendet werden. Ein derartiges Abstandsmaß für Zeichenketten ist im Stand der Technik bereits grundsätzlich bekannt und gibt an, wie viele Änderungen erforderlich sind, um von einer Zeichenkette zur anderen Zeichenkette zu gelangen. Mithin eignet sich das Levenshtein-Maß besonders für den Vergleich von Straßennamen.

Entsprechend sieht auch eine zweckmäßige Ausgestaltung vor, dass der Adressvergleich auf den Straßennamen eingeschränkt durchgeführt wird. Meist ist es ausreichend, festzustellen, ob die in der ersten Adresse angegebene Straße im Zielbereich tatsächlich existiert, um die erste Adresse als hinreichend plausibel die geodätische Position beschreibend anzusehen.

Nichtsdestotrotz ist eine genauere, insbesondere auch eine Hausnummer enthaltende zweite Adresse als Navigationsziel zweckmäßiger, so dass eine bevorzugte Ausgestaltung der vorliegenden Erfindung vorsieht, dass für eine als Navigationsziel bestimmte zweite Adresse überprüft wird, ob eine in der ersten Adresse enthaltene Hausnummer in der durch den durch den Vergleich bestätigten Straßennamen der zweiten Adresse bezeichneten Straße gemäß der Kartendaten existiert und bei Existenz diese Hausnummer gewählt wird. Es wird mithin festgestellt, ob die in der ersten Adresse enthaltene Hausnummer gemäß der digitalen Kartendaten in der durch den Straßennamen bezeichneten Straße überhaupt existiert. Ist dies der Fall, ist davon auszugehen, dass diese Hausnummer korrekt ist und sie wird in die zweite Adresse übernommen, bevor diese als Navigationsziel gewählt wird. Existiert die Hausnummer gemäß der digitalen Kartendaten nicht, kann alternativ auf andere Weise eine Hausnummer bestimmt werden, wobei die entsprechende Maßnahme auch in anderen Fällen als bei der Nichtexistenz der Hausnummer in den Kartendaten anwendbar ist.

So sieht eine Weiterbildung der Erfindung vor, dass bei keiner in der ersten Adresse enthaltenen Hausnummer und/oder bei Nichtexistenz einer in der ersten Adresse enthaltenen Hausnummer in der durch den durch den Vergleich bestätigten Straßennamen der zweiten Adresse bezeichneten Straße gemäß der Kartendaten und/oder bei einer zu großen räumlichen und/oder numerischen Distanz zwischen einer Hausnummer der ersten Adresse in der durch den durch den Vergleich bestätigten Straßennamen der zweiten Adresse bezeichneten Straße gemäß der Kartendaten und der Position bzw. einer der Position nächstgelegenen Hausnummer in der durch den durch den Vergleich bestätigten Straßennamen der zweiten Adresse bezeichneten Straße gemäß der Kartendaten für die zweite Adresse die gemäß der Kartendaten der Position in der durch den durch den Vergleich bestätigten Straßennamen der zweiten Adresse bezeichneten Straße nächstgelegene Hausnummer gewählt wird.

Als eine Art "fall back"-Lösung für eine in dem Zieldatensatz oder den Kartendaten für die Straße nicht existierende Hausnummer bzw. dann, wenn eine zusätzliche Überprüfung feststellt, dass die in dem Zieldatensatz genannte Hausnummer deutlich zu weit von der geodätischen Position entfernt liegt, kann eine Hausnummer für das Navigationsziel mit der zweiten Adresse auch bestimmt werden, in dem die der geodätischen Position nächstgelegene Hausnummer auf der durch den Straßennamen der zweiten Adresse bezeichneten Straße verwendet wird, um das Navigationsziel genauer zu definieren. Grundsätzlich ist es zwar auch möglich, dann den Benutzer einfach nur zur der Straße an sich zu führen, zweckmäßiger ist es jedoch, den Benutzer möglich nah an seinen Zielort heranzubringen.

Der Zieldatensatz wird dabei aus einer Internetquelle erhalten. Beispiele für derartige Internetquellen sind Internet-Kartensysteme und Routenplaner, Reiseführer, Event-Services, die zu einem Ereignis einen entsprechenden POI liefern, und dergleichen. Dabei muss die Quelle des Zieldatensatzes nicht zwangsläufig unmittelbar das Internet sein, nachdem beispielsweise auch eine App eines mit dem Kraftfahrzeug verbundenen Mobiltelefons entsprechende Zieldatensätze an das Kraftfahrzeug übermitteln kann und dergleichen.

Es ist zweckmäßig, wenn die Navigation zu der zweiten und/oder dritten Adresse erst nach einer Bestätigung der jeweiligen Adresse durch einen Benutzer erfolgt. Das bedeutet, sobald die zweite bzw. die dritte Adresse ausgewählt wurde, wird sie zunächst, beispielsweise über eine entsprechende Benutzerschnittstelle eines Mensch-Maschine-Interfaces, dem Benutzer zur Anzeige gebracht und dieser kann sie noch bestätigen, bevor die eigentliche Zielführung zu dem Navigationsziel beginnt.

Neben dem Verfahren betrifft die Erfindung auch ein Kraftfahrzeug, umfassend ein Navigationssystem mit einem zur Durchführung eines Verfahrens der erfindungsgemäßen Art ausgebildeten Steuergerät. Sämtliche Ausführungen bezüglich des erfindungsgemäßen Verfahrens lassen sich analog auf das erfindungsgemäße Kraftfahrzeug übertragen, mit welchem mithin auch die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan eines Ausführungsbeispiels des erfindungsgemäßen Verfahrens,
- Fig. 2: eine Skizze zur Erläuterung des Verfahrens, und
- Fig. 3: ein erfindungsgemäßes Kraftfahrzeug.

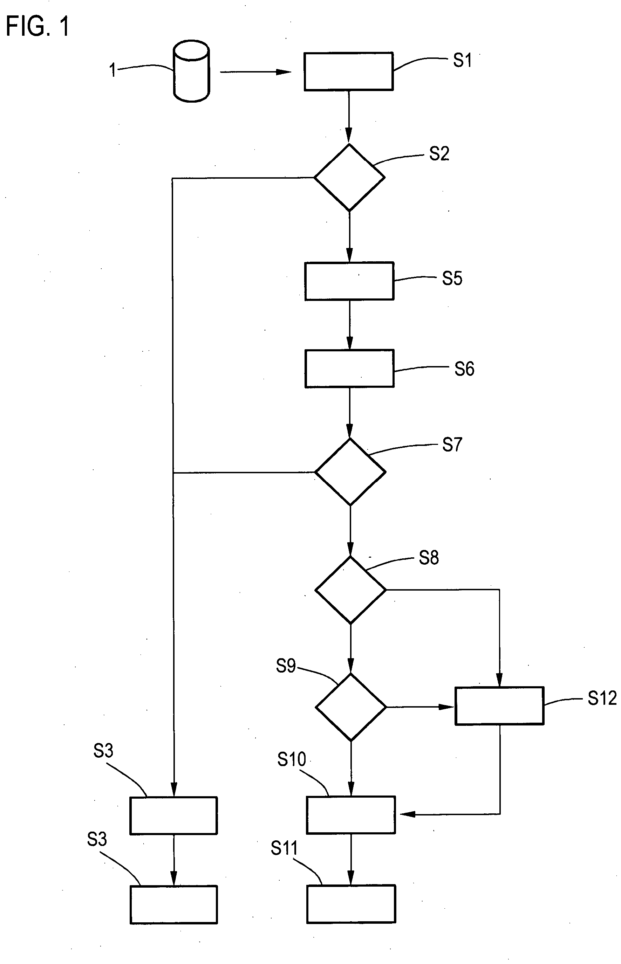

Fig. 1 zeigt einen Ablaufplan eines Ausführungsbeispiels des erfindungsgemäßen Verfahrens, bei dem in einem Schritt S1 ein Zieldatensatz 1, vorliegend von einer Internetquelle, an ein Navigationssystem eines Kraftfahrzeugs weitergegeben wird. Der Zieldatensatz 1 beschreibt anhand einer geodätischen Position und einer Adresse einen Zielort, an den ein Fahrer des Kraftfahrzeugs gerne geführt werden würde. Aus diesem Zieldatensatz soll nun ein für das Navigationssystem geeignetes Navigationsziel abgeleitet werden, wozu das hier dargestellte Verfahren hauptsächlich dient.

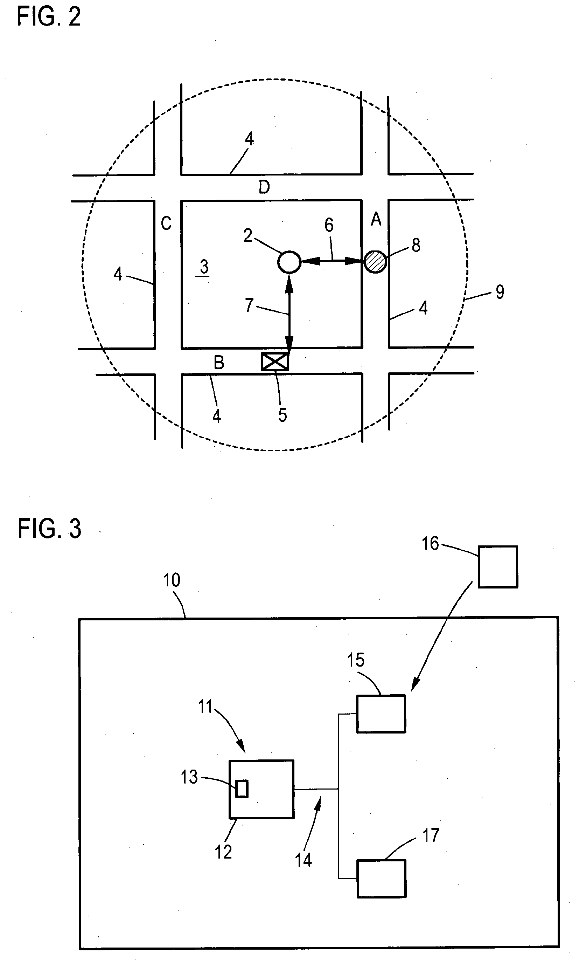

Die Zusammenhänge sind dabei in der Prinzipskizze der Fig. 2 nochmals dargestellt. Die geodätische Position 2 liegt dabei ersichtlich innerhalb eines bebauten Blocks 3, der von vier Straßen 4 begrenzt ist, die auch in den digitalen Kartendaten des Navigationssystems verzeichnet sind. Vorliegend wurden im Beispiel vereinfachte Straßenbezeichnungen gewählt, so dass es sich bei der Straße rechts der Position 2 um die A-Straße, unterhalb der Position 2 um die B-Straße, links der Position 2 um die C-Straße und oberhalb der Position 2 (nördlich) um die D-Straße handelt. Die in dem Zieldatensatz 1 enthaltene erste Adresse 5 liegt in der B-Straße.

Würde man nun wie aus dem Stand der Technik bekannt vorgehen, würde man feststellen, dass die Position 2 am nächsten an der A-Straße liegt, das bedeutet, der kürzeste Abstand 6 der geodätischen Position 2 von der A-Straße ist kleiner als der kürzeste Abstand 7 von der geodätischen Position 2 zu der B-Straße. Hieraus würde ein Navigationssystem gemäß dem Stand der Technik, welches sich ausschließlich an der geodätischen Position 2 orientiert, schließen, dass der Fahrer in die A-Straße geführt werden müsste, beispielsweise zu der nächstgelegenen Hausnummer der A-Straße an eine dritte Adresse 8. Dann müsste der Fahrer allerdings noch einmal um den gesamten Block herumfahren, um die tatsächliche Zufahrt zum Zielort überhaupt zu finden.

Das in Fig. 1 dargestellte Ausführungsbeispiel des erfindungsgemäßen Verfahrens nutzt nun aber die auch in dem Zieldatensatz 1 enthaltene erste Adresse 5, um dahingehend eine Verbesserung zu erreichen.

In einem Schritt S2 wird dabei zunächst überprüft, ob der Zieldatensatz 1 überhaupt eine erste Adresse enthält. Ist dies nicht der Fall, wird in einem Schritt S3 wie im Stand der Technik bekannt die räumlich am nächsten gelegene dritte Adresse 8 durch das Steuergerät des Navigationssystems bestimmt und als Navigationsziel verwendet, welches in einem Schritt S4 angesteuert wird. Denn dann liegt keine weitere Information vor, die für eine plausiblere Wahl verwendet werden könnte.

Es soll nun jedoch von einem Fall ausgegangen werden, in dem in dem Zieldatensatz 1 auch eine erste Adresse 5 enthalten ist, so dass im Schritt S5. fortgefahren wird. Dort werden Testadressen in einem Zielbereich 9, vgl. Fig. 2, bestimmt, die sich für ein Navigationsziel anbieten. Der Zielbereich 9 erstreckt sich vorliegend mit einem Durchmesser von 200 m um die geodätische Position 2. Nachdem vorliegend die Plausibilität der ersten Adresse 5 anhand der Straßennamen festgestellt werden soll, werden als Testadressen zunächst nur die entsprechenden in den Kartendaten des Navigationssystems für den Zielbereich 9 enthaltenen Straßen 4 ausgewählt, vorliegend mithin als Testadressen die A-Straße, die B-Straße, die C-Straße und die D-Straße in der entsprechenden Ortschaft erhalten.

In einem Schritt S6 wird nun eine Abweichungsinformation für jeden Straßennamen der Testadressen zu dem Straßenname der ersten Adresse 5, also B-Straße, ermittelt. Ersichtlich ist vorliegend in dem einfachen Beispiel, nachdem das Levenshtein-Maß als Abweichungsmaß verwendet wird, die geringste Abweichung bei der B-Straße gegeben, da dies identisch dem Straßennamen der entsprechenden Testadresse entspricht. Im abstrahierten Ausführungsbeispiel der Fig. 2 wäre das Abweichungsmaß für die A-Straße, die C-Straße und die D-Straße Eins, da nur ein Buchstabe geändert werden muss; in der Praxis sind Straßennamen selbstverständlich länger und komplexer, so dass es zu größeren Abweichungsmaßen bei ungleichen Straßennamen kommt und zu kleineren Abweichungen bei lediglich unterschiedlich geschriebenen, dieselbe Straße 4 bezeichnenden Straßennamen. Die Testadresse mit der geringsten Abweichung, hier also "B-Straße", wird in Schritt S6 als zweite Adresse ausgewählt.

Im Schritt S7 wird nun überprüft, ob das Abweichungsmaß einen Maximalwert überschreitet, der mithin die Toleranz für unterschiedliche Schreibweisen ein und derselben Straße 4 angibt. Für das Levenshtein-Maß kann ein solcher Maximalwert beispielsweise "3" betragen. Ist das Abweichungsmaß nun größer als dieser Maximalwert, wird davon ausgegangen, dass in der ersten Adresse 5 und der Testadresse unterschiedliche Straßen gemeint sind, mithin die in der ersten Adresse 5 angegebene Straße nicht im Zielbereich 9 liegt. Ist dies der Fall, wird wieder auf das bisherige Verfahren zur Bestimmung eines Navigationsziels in den Schritten S3 und S4 zurückgegriffen, wie dies auch in Fig. 1 dargestellt ist.

Tritt jedoch, wie im Beispiel der Fig. 2, der Fall auf, dass der Straßenname der im Schritt S6 aus den Testadressen ausgewählten zweiten Adresse dem der ersten Adresse entspricht, wird mit einem Schritt S8 fortgefahren, in dem überprüft wird, ob in der ersten Adresse 5 auch eine Hausnummer enthalten ist. Ist dies der Fall, finden in einem Schritt S9 zwei weitere Überprüfungen statt. Zunächst wird überprüft, ob die in der ersten Adresse 5 genannte Hausnummer laut den Kartendaten des Navigationssystems in der durch den Straßennamen der zweiten Adresse bezeichneten Straße überhaupt existiert. Ist dies der Fall, findet eine optionale zweite Überprüfung statt, nämlich, ob die durch die Hausnummer der ersten Adresse vervollständigte zweite Adresse überhaupt hinreichend nah an der geodätischen Position 2 liegt, beispielsweise innerhalb des Zielbereichs 9. Dies ist im Beispiel der Fig. 2 der Fall. Treffen also auch diese beiden Überprüfungen in Schritt S9 zu, wird in Schritt S10 die zweite Adresse um die Hausnummer der ersten Adresse ergänzt und diese als Navigationsziel eingestellt. In einem Schritt S11 erfolgt dann die Navigation zu der zweiten Adresse.

Wird im Schritt S8 festgestellt, dass die erste Adresse 5 keine Hausnummer enthält oder im Schritt S9 festgestellt, dass die Hausnummer der ersten Adresse laut den Kartendaten überhaupt nicht existiert oder weit von der Position 2 entfernt liegt, wird in einem Schritt S12 versucht, eine geeignete Hausnummer für die zweite Adresse zu ergänzen, indem die nächstgelegene Hausnummer auf der durch den Straßennamen der zweiten Adresse bezeichneten Straße 4 zu der Position 2 gesucht wird. Diese Hausnummer wird dann der zweiten Adresse hinzugefügt, welche dann in Schritt S10 wiederum als Navigationsziel ausgewählt wird.

Auf diese Weise ist mithin eine verbesserte Führung an den gewünschten Zielort möglich.

Fig. 3 zeigt schließlich eine Prinzipskizze eines erfindungsgemäßen Kraftfahrzeugs 10. Dieses umfasst ein Navigationssystem 11 mit einem Steuergerät 12, das zur Durchführung des erfindungsgemäßen Verfahrens ausgebildet ist. Innerhalb des Steuergeräts 12 sind auch die digitalen Kartendaten 13 gespeichert. Das Steuergerät 12 ist an ein Bussystem 14 des Kraftfahrzeugs 10, beispielsweise einen CAN-Bus, angeschlossen, so dass es Daten mit anderen Fahrzeugsystemen austauschen kann, beispielsweise mit einem Steuergerät 15, über das eine Verbindung in das Internet hergestellt wurde. Dann kann ein von einer Internetquelle 16 abgerufener Zieldatensatz 1 an das Steuergerät 12 weitergegeben werden.

Ferner hat das Navigationssystem 11 über das Bussystem 14 Zugriff auf ein Mensch-Maschine-Interface 17, mit dem selbstverständlich auch das Steuergerät 15 kommunizieren kann. Über das Mensch-Maschine-Interface 17 ist es insbesondere möglich, eine ermittelte zweite oder dritte Adresse nochmals durch den Benutzer bestätigen zu lassen, bevor die Führung an das Navigationsziel gemäß der Schritt S4 bzw. S11 stattfindet.

## Patentansprüche

1. Verfahren zum Betrieb eines Navigationssystems (11) eines Kraftfahrzeugs (10),
mit folgenden Schritten:
- Empfang eines eine geodätische Position (2) und eine der Position (2) zugeordnete erste Adresse (5) enthaltenden Zieldatensatzes (1) aus einer Internetquelle (16),
- Bestimmung von mit dem Kraftfahrzeug (10) erreichbaren, wenigstens einen Straßennamen enthaltenden Testadressen in einem Zielbereich (9) um die Position (2) unter Berücksichtigung von dem Navigationssystem (11) vorliegenden, geodätisch zuordenbaren digitalen Kartendaten (13),
- Auswahl einer zweiten Adresse aus den Testadressen, für die wenigstens eine die Testadresse beschreibende Zeichenkette am wenigsten von einer entsprechenden, die erste Adresse (5) beschreibenden Zeichenkette abweicht, und
- dann, wenn ein Abweichungsmaß der zweiten Adresse von der ersten Adresse (5) einen Maximalwert unterschreitet oder diesem entspricht, Betreiben des Navigationssystems (11) zur Navigation zu der zweiten Adresse.

2. Verfahren nach Anspruch 1,
**dadurch gekennzeichnet,**
**dass**, falls das Abweichungsmaß der zweiten Adresse von der ersten Adresse (5) den Maximalwert überschreitet, eine räumlich am nächsten zur Position (2) gelegene dritte mit dem Kraftfahrzeug (10) erreichbare Adresse (8) in den Kartendaten (13) ausgewählt wird und das Navigationssystem (11) zur Navigation zu der dritten Adresse (8) betrieben wird.

3. Verfahren nach Anspruch 1 oder 2,
**dadurch gekennzeichnet,**
**dass** der Zielbereich (9) eine vorbestimmte Ausdehnung um die Position (2) aufweist, insbesondere eine Ausdehnung im Bereich von 50 bis 300 m, oder die Ausdehnung des Zielbereichs (9) von der Anzahl innerhalb verschiedener Testbereiche aufgefundener Testadressen abhängig gewählt wird.

4. Verfahren nach einem der vorangehenden Ansprüche,
**dadurch gekennzeichnet,**
**dass** insbesondere bei zusätzlich zu dem Straßennamen weitere Daten enthaltenden Testadressen die Anzahl der Testadressen vor dem Vergleich mit der ersten Adresse anhand eines Redundanzkriteriums reduziert wird, wobei für jeden Straßennamen nur eine am nächsten zu der Position (2) gelegene Testadresse beibehalten wird.

5. Verfahren nach einem der vorangehenden Ansprüche,
**dadurch gekennzeichnet,**
**dass** als Abweichungsmaß ein Levenshtein-Maß verwendet wird.

6. Verfahren nach einem der vorangehenden Ansprüche,
**dadurch gekennzeichnet,**
**dass** der Adressvergleich auf den Straßennamen eingeschränkt durchgeführt wird.

7. Verfahren nach Anspruch 6,
**dadurch gekennzeichnet,**
**dass** für eine als Navigationsziel bestimmte zweite Adresse überprüft wird, ob eine in der ersten Adresse (5) enthaltene Hausnummer in der durch den durch den Vergleich bestätigten Straßennamen der zweiten Adresse bezeichneten Straße (4) gemäß der Kartendaten (13) existiert und bei Existenz diese Hausnummer gewählt wird.

8. Verfahren nach Anspruch 6 oder 7,
**dadurch gekennzeichnet,**
**dass** bei keiner in der ersten Adresse (5) enthaltenen Hausnummer und/oder bei Nichtexistenz einer in der ersten Adresse (5) enthaltenen Hausnummer in der durch den durch den Vergleich bestätigten Straßennamen der zweiten Adresse bezeichneten Straße (4) gemäß der Kartendaten (13) und/oder bei einer zu großen räumlichen und/oder numerischen Distanz zwischen einer Hausnummer der ersten Adresse (5) in der durch den durch den Vergleich bestätigten Straßennamen der zweiten Adresse bezeichneten Straße (4) gemäß der Kartendaten (13) und der Position (2) bzw. einer der Position (2) nächstgelegenen Hausnummer in der durch den durch den Vergleich bestätigten Straßennamen der zweiten Adresse bezeichneten Straße (4) gemäß der Kartendaten (13) für die zweite Adresse die gemäß der Kartendaten (13) der Position (2) in der durch den durch den Vergleich bestätigten Straßennamen der zweiten Adresse bezeichneten Straße (4) nächstgelegene Hausnummer gewählt wird.

9. Verfahren nach einem der vorangehenden Ansprüche,
**dadurch gekennzeichnet,**
**dass** die Navigation zu der zweiten und/oder dritten Adresse (8) erst nach einer Bestätigung der jeweiligen Adresse (8) durch einen Benutzer erfolgt.

10. Kraftfahrzeug (10), umfassend ein Navigationssystem (11) mit einem zur Durchführung eines Verfahrens nach einem der vorangehenden Ansprüche ausgebildeten Steuergerät (12).

## Claims

1. Method for operating a navigation system (11) of a motor vehicle (10), with the following steps:
- receiving, from an internet source (16), a destination data record (1) including a geodetic position (2) and a first address (5) assigned to the position (2),
- determining test addresses accessible to the motor vehicle (10) based on geodetic assignable digital map data (13) available to the navigation system (11), the test addresses comprising at least one street name in a destination region (9) around the position (2),
- selecting a second address from the test addresses for which at least one character string describing the test address deviates the least from a corresponding character string describing the first address (5), and
- if a level of deviation of the second address from the first address (5) is below a predetermined threshold or corresponds to a predetermined threshold, operating the navigation system (11) for navigating to the second address.

2. Method according to claim 1,
**characterised in that**
if the level of deviation of the second address from the first address (5) exceeds the predetermined threshold, a third address (8) which is spatially closest to the position (2) and accessible to the motor vehicle (10) is selected from the map data (13) and the navigation system (11) is operated for navigating to the third address (8).

3. Method according to claim 1 or 2,
**characterised in that**
the destination region (9) has a predetermined dimension around the position (2), in particular a dimension in the range of 50 to 300 meters, or the dimension of the destination region (9) is determined based on the number of test addresses found within different test regions.

4. Method according to any of the preceding claims,
**characterised in that**
the number of test addresses is reduced prior to comparison with the first address based on a redundancy criterion if, in particular, the test addresses contain further data in addition to the street name, wherein for each street name only a test address located nearest to the position (2) is retained.

5. Method according to any of the preceding claims,
**characterised in that**
a Levenshtein measure is used as a level of discrepancy.

6. Method according to any of the preceding claims,
**characterised in that**
the address comparison is carried out using only the street name.

7. Method according to claim 6,
**characterised in that**
it is determined for a second address specified as navigation destination if a house number included in the first address (5) exists in the street (4) described by the street name of the second address confirmed by the comparison in accordance with the map data (13) and, if it exists, this house number is selected.

8. Method according to claim 6 or 7,
**characterised in that**
for none of the house numbers included in the first address (5) and/or if no house number exists in the first address (5) in the street (4) described by the street name of the second address confirmed by the comparison in accordance with the map data (13), and/or if a spatial and/or numeric distance is too big between a house number of the first address (5) in the street (4) described by the street name of the second address confirmed by the comparison in accordance with the map data (13) and the position (2) or a house number closest to the position (2) in the street (4) described by the street name of the second address confirmed by the comparison in accordance with the map data (13), for the second address the house number closest to the position (2) in the street (4) described by the street name of the second address confirmed by the comparison in accordance with the map data (13) is selected.

9. Method according to any of the preceding claims,
**characterised in that**
the navigation to the second and/or third address (8) only takes place after a confirmation of the respective address (8) by a user.

10. Motor vehicle (10), comprising a navigation system (11) with a control device (12) configured to carry out a method according to any of the preceding claims.

## Revendications

1. Procédé d'utilisation d'un système de navigation (11) d'un véhicule automobile (10),
avec les étapes suivantes :
- réception d'un jeu de données cible (1) contenant une position géodésique (2) et une première adresse (5) associée à la position (2) à partir d'une source Internet (16),
- détermination d'adresses de test contenant au moins un nom de rue, pouvant être atteintes avec le véhicule automobile (10) dans une zone cible (9) autour de la position (2) en tenant compte de données cartographiques (13) numériques associables géodésiquement, disponibles dans le système de navigation (11),
- sélection d'une deuxième adresse parmi les adresses de test, pour laquelle au moins une chaîne de caractères décrivant l'adresse de test diverge le moins d'une chaîne de caractères correspondante, décrivant la première adresse (5), et
- ensuite, lorsqu'une mesure d'écart de la deuxième adresse par rapport à la première adresse (5) passe sous une valeur maximale ou correspond à celle-ci, utilisation du système de navigation (11) pour la navigation vers la deuxième adresse.

2. Procédé selon la revendication 1,
**caractérisé en ce**
**que**, si la mesure d'écart de la deuxième adresse par rapport à la première adresse (5) dépasse la valeur maximale, une troisième adresse (8) pouvant être atteinte avec le véhicule automobile (10) spatialement la plus proche de la position (2) est sélectionnée dans les données cartographiques (13) et le système de navigation (11) est utilisé pour la navigation vers la troisième adresse (8).

3. Procédé selon la revendication 1 ou 2,
**caractérisé en ce**
**que** la zone cible (9) présente une étendue prédéfinie autour de la position (2), en particulier une étendue de l'ordre de 50 à 300 m, ou l'étendue de la zone cible (9) est choisie en fonction du nombre d'adresses de test trouvées à l'intérieur de différentes zones de test.

4. Procédé selon l'une quelconque des revendications précédentes,
**caractérisé en ce**
**qu'**en particulier dans le cas d'adresses de test contenant d'autres données en plus du nom de rue, le nombre d'adresses de test est réduit avant la comparaison avec la première adresse à l'aide d'un critère de redondance, dans lequel seule une adresse de test la plus proche de la position (2) est conservée pour chaque nom de rue.

5. Procédé selon l'une quelconque des revendications précédentes,
**caractérisé en ce**
**qu'**une mesure de Levenshtein est utilisée en tant que mesure d'écart.

6. Procédé selon l'une quelconque des revendications précédentes,
**caractérisé en ce**
**que** la comparaison d'adresses est réalisée en se limitant au nom de rue.

7. Procédé selon la revendication 6,
**caractérisé en ce**
**que** pour une deuxième adresse déterminée en tant que destination de navigation, il est vérifié si un numéro de bâtiment contenu dans la première adresse (5) existe dans la rue (4) désignée par le nom de rue de la deuxième adresse confirmé par la comparaison conformément aux données cartographiques (13) et en cas d'existence, ce numéro de bâtiment est sélectionné.

8. Procédé selon la revendication 6 ou 7,
**caractérisé en ce**
**qu'**en cas d'absence de numéro de bâtiment dans la première adresse (5) et/ou en cas de non-existence d'un numéro de bâtiment contenu dans la première adresse (5) dans la rue (4) désignée par le nom de rue de la deuxième adresse confirmé par la comparaison conformément aux données cartographiques (13) et/ou en cas de distance spatiale et/ou numérique trop grande entre un numéro de bâtiment de la première adresse (5) dans la rue (4) désignée par le nom de rue de la deuxième adresse confirmé par la comparaison conformément aux données cartographiques (13) et la position (2) ou un numéro de bâtiment le plus proche de la position (2) dans la rue (4) désignée par le nom de rue de la deuxième adresse confirmé par la comparaison conformément aux données cartographiques (13) pour la deuxième adresse, le numéro de bâtiment le plus proche de la position (2) dans la rue (4) désignée par le nom de rue de la deuxième adresse confirmé par la comparaison conformément aux données cartographiques (13) est sélectionné.

9. Procédé selon l'une quelconque des revendications précédentes,
**caractérisé en ce**
**que** la navigation vers la deuxième et/ou troisième adresse (8) n'a lieu qu'après une confirmation de l'adresse respective (8) par un utilisateur.

10. Véhicule automobile (10), comprenant un système de navigation (11) avec un appareil de commande (12) configuré pour la réalisation d'un procédé selon l'une quelconque des revendications précédentes.
